(19) Europäisches Patentamt

European Patent Office

Office européen des brevets

(11) **EP 1 444 109 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(21) Anmeldenummer: 02802966.8

(22) Anmeldetag: **04.11.2002**

(51) Int Cl.⁷: **B60K 41/00**

(86) Internationale Anmeldenummer:
**PCT/DE2002/004093**

(87) Internationale Veröffentlichungsnummer:
**WO 2003/041989 (22.05.2003 Gazette 2003/21)**

(54) **ANTRIEBSSTRANG EINES KRAFTFAHRZEUGS UND VERFAHREN ZUM STEUERN DES ANTRIEBSSTRANGS**

POWER TRAIN OF A MOTOR VEHICLE AND METHOD FOR CONTROLLING SAID POWER TRAIN

CHA NE CIN MATIQUE D'UN V HICULE AUTOMOBILE ET PROC D DE COMMANDE D'UNE CHA NE CIN MATIQUE

(84) Benannte Vertragsstaaten:
**DE FR IT**

(30) Priorität: **12.11.2001 DE 10155433**

(43) Veröffentlichungstag der Anmeldung:
**11.08.2004 Patentblatt 2004/33**

(73) Patentinhaber: **Siemens Aktiengesellschaft
80333 München (DE)**

(72) Erfinder:
• **GRAF, Friedrich
93161 Sinzing (DE)**
• **GUTKNECHT-STÖHR, Florian
93047 Regensburg (DE)**
• **PROBST, Gregor
84028 Landshut (DE)**
• **RAMPELTSHAMMER, Martin
93055 Regensburg (DE)**

(56) Entgegenhaltungen:
EP-A- 1 068 977          DE-A- 10 036 966
US-A- 4 487 303          US-A- 4 680 959
US-A- 5 887 670          US-A- 6 098 007

**Beschreibung**

Die Erfindung betrifft einen Antriebsstrang nach dem Oberbegriff von Anspruch 1. Dieser Antriebsstrang eines Kraftfahrzeugs, schließt ein eine gesteuerte Antriebsquelle, eine Kupplung, ein automatisch schaltendes Getriebe und eine den Datenaustausch zwischen den Bestandteilen des Antriebsstrangs ermöglichende Datenübertragungseinrichtung.

Kraftfahrzeuge mit einer Verbrennungskraftmaschine, einem automatischen Getriebe und einem hydrodynamischen Drehmomentwandler (im folgenden auch als HTC bezeichnet) weisen ein Anfahrverhalten auf, das wegen der Momentenüberhöhung durch den HTC, insbesondere bei einem niedrigen Verhältnis der Eingangs- zu der Ausgangsdrehzahl des Wandlers, höhere Fahrzeugbeschleunigungen ermöglicht (Fachkunde Kraftfahrzeugtechnik, Verlag Europa-Lehrmittel, 26. Auflage 1999, Haan-Gruiten, S. 403-404). Die Momentenüberhöhung durch den Drehmomentwandler wird deshalb von einem Fahrer des Kraftfahrzeugs als günstig empfunden.

Kraftfahrzeuge mit einem Antriebsstrang, der einen Kurbelwellenstartergenerator (im folgenden auch als ISG bezeichnet), eine Verbrennungskraftmaschine und ein automatisiertes Handschaltgetriebe enthält, nicht jedoch einen hydrodynamischen Drehmomentwandler, sind zum Entkoppeln der Kurbelwellendrehung von der Raddrehung lediglich mit einer Reibungskupplung versehen, die nicht in der Lage ist, das Antriebsdrehmoment gegenüber dem Drehmoment an der Kurbelwelle zu überhöhen.

EP 1 068 977 offenbart einen Antriebsstrang gemäß dem Oberbegriff des Anspruchs 1.

Der Erfindung liegt die Aufgabe zugrunde, einen Antriebsstrang eines mit einer Reibungskupplung versehenen Kraftfahrzeugs zu schaffen, das ein Anfahrverhalten wie das eines mit einem hydrodynamischen Drehmomentwandler versehenen Kraftfahrzeugs aufweist.

Die Aufgabe der Erfindung wird durch einen Antriebsstrang nach Anspruch 1 und durch ein Verfahren nach Anspruch 8 gelöst. Der Antriebsstrang enthält eine zusätzliche Antriebsquelle und ist mit einem Steuersystem versehen, durch das anhand eines Vergleichs des realen Verhaltens des Antriebsstrangs mit einem modellierten Verhalten eines mit einem hydrodynamischen Drehmomentwandler versehenen Antriebsstrangs ein Korrekturwert für das Antriebsquellendrehmoment erzeugt wird.

Zweckmäßige Weiterbildungen der Erfindung sind in den Unteransprüchen niedergelegt. Die gesteuerte Antriebsquelle ist ein Verbrennungsmotor; die zusätzliche Antriebsquelle ist ein Kurbelwellenstartergenerator (12), die Kupplung ist als automatisch betätigte Reibungskupplung ausgebildet ist, und ein Regelkreis (21-27) ist vorgesehen, durch den das Verhalten eines Drehmomentwandlers nachgebildet wird.

Das Steuersystem enthält einen Umrechnungsblock, durch den anhand des Korrekturwerts eine Umrechnung eines geforderten Raddrehmoments in ein Kurbelwellendrehmoment durchgeführt wird, und eine Korrektureinrichtung, in der der Korrekturwert für das Drehmoment erzeugt wird. Außerdem weist es eine Momentenaufteilung auf, durch die das Antriebsquellendrehmoment auf die Antriebsquelle und die zusätzliche Antriebsquelle aufgeteilt wird. Das Steuersystem enthält auch einen Beobachterblock, der ein Modell eines Antriebsstrangs mit einem hydrodynamischen Drehmomentwandler darstellt und durch den eine Fahrzeuggeschwindigkeit berechnet wird, die derjenigen Geschwindigkeit entspricht, die ein vergleichbares Kraftfahrzeug, das mit einem hydrodynamischen Drehmomentwandler und einem Automatikgetriebe versehen ist, bei gleichem Fahrerwunsch einnimmt. Die Fahrzeuggeschwindigkeit und das geforderte Antriebsdrehmoment für den Antriebsstrang werden mit weiter hinten angegebenen Gleichungen berechnet.

Die Vorteile der Erfindung liegen insbesondere darin, dass der Antriebsstrang durch den als Raddrehmoment interpretierten Fahrerwunsch gesteuert und aufgrund der Abweichung zwischen modelliertem und realem Fahrzeugverhalten geregelt wird, womit sich das gewünschte Fahrverhalten mit geringem Aufwand erreichen lässt. Das vorteilhafte Anfahrverhalten eines konventionellen Automatikgetriebes mit hydrodynamischem Drehmomentwandler wird ohne den für einen derartigen Antriebsstrang notwendigen hohen Aufwand und höheren Kraftstoffverbrauch erreicht. Ein zusätzlicher Antrieb in Gestalt eines Kurbelwellenstartergenerators erhält eine weitere nützliche Funktion.

Ausführungsbeispiele der Erfindung werden im folgenden anhand der Zeichnungen erläutert. Es zeigen:

Figur 1   einen mit einem Steuersystem versehenen Antriebsstrang gemäß der Erfindung;
Figur 2   ein Blockschaltbild einer Regelungsstruktur des Steuersystems nach Figur 1,
Figur 3   ein Blockschaltbild zur Berechnung des erforderlichen Antriebsquellendrehmoments in der Regelungsstruktur nach Figur 1;
Figur 4   einen Signalflussplan eines Modells des Antriebsstrangs nach Figur 1, und
Figur 5   einen Korrekturblock, der Bestandteil der Regelungsstrukur nach Figur 2 ist.

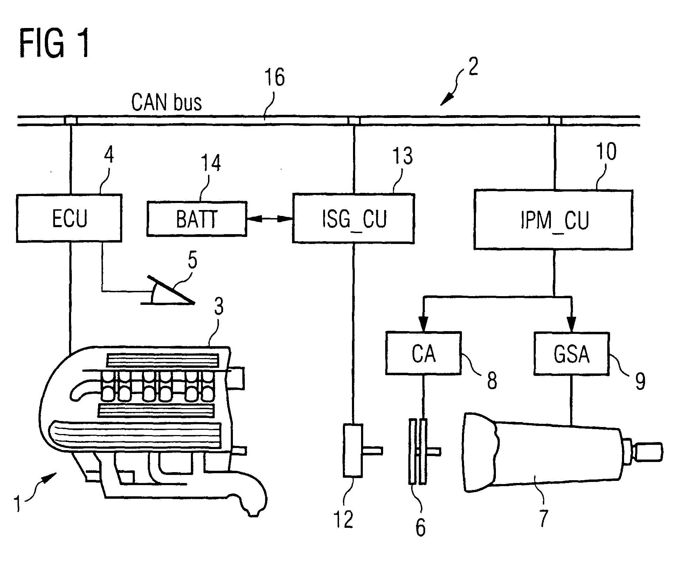

Ein Antriebsstrang 1 eines nicht weiter dargestellten Kraftfahrzeugs wird durch ein Steuersystem 2 gesteuert (Figur 1). Bestandteile des Antriebsstrangs und dessen Steuersystems sind insbesondere eine erste Antriebsquelle in Gestalt eines Verbrennungsmotors 3, eine Motorsteuerung 4, die Signale von einem Fahrpedal 5 empfängt, eine Reibungskupplung 6, ein automatisiertes Handschaltgetriebe 7 (im folgenden auch als Getriebe bezeichnet), ein Kupplungsaktuator 8 und ein Schaltaktuator 9 für das Getriebe 7. Eine übergeordnete Steuerung 10, eine sogenannte IPM-Steuerung (IPM = Integrated Powertrain Management), steuert den Motor 3 über die Motorsteuerung 4, die Reibungskupplung 6 über den Kupplungsaktuator 8 und das automatisiertes Handschaltgetriebe 7 über den Schaltaktuator 9.

Der Antriebsstrang 1 enthält außerdem eine zusätzliche Antriebsquelle in Gestalt eines Kurbelwellenstartergenerators 12 (im folgenden auch als ISG bezeichnet), der sowohl als Anlasser wie auch als Lichtmaschine dient. Er wird durch eine ISG-Steuerung 13 gesteuert und ist über diese mit einem Energiespeicher 14, der hier als 42-Volt-Batterie ausgebildet ist, verbunden. Die Steuerungen 4, 10, 13 und 14 sind durch eine Datenübertragungseinrichtung in Gestalt eines CAN-Busses 16 miteinander verbunden und können somit Statusmeldungen, Sensorsignale, Befehle und dergleichen Informationen untereinander austauschen.

Die zusätzliche Antriebsquelle kann auch aus einem anderen Zusatzmotor, zum Beispiel aus einem durch einen Riemen oder eine Kette mit der Eingangswelle der Kupplung 6 verbundenen Elektromotor bestehen.

Ziel des Steuersystems 2 ist wie erwähnt das gute Anfahrverhalten von Kraftfahrzeugen mit einem hydrodynamischen Drehmomentwandler in dem vorstehend beschriebenen Antriebsstrang 1 ohne Drehmomentwandler aber mit einem zusätzlichen Motor zu realisieren. Dazu wird die Reaktion eines Antriebsstranges mit hydrodynamischem Drehmomentwandler auf den Fahrerwunsch modelliert. Als Fahrerwunsch wird die Betätigung des Fahrpedals 5 durch den Fahrer des Kraftfahrzeugs interpretiert.

Aus einem Vergleich eines realen Verhaltens, das heißt hier des Verhaltens eines Kraftfahrzeugs mit automatisiertem Handschaltgetriebe und Kurbelwellenstartergenerator, und eines modellierten Verhaltens, das heißt hier des Verhaltens eines Kraftfahrzeugs mit hydrodynamischem Drehmomentwandler und Automatikgetriebe, wird ein Korrekturwert oder Korrekturfaktor ermittelt, der in die Umrechnung des Fahrerwunsches in ein Drehmoment an der Kurbelwelle (Motormoment) eingeht. Die Modellierung erfolgt mit einem regelungstechnischen Beobachter und entspricht dem Berechnen des Verhaltens eines mathematischen Modells - des Beobachtermodells - des Antriebsstrangs.

Der Fahrerwunsch wird dabei als "radmomentenbasiert" betrachtet, das heißt der durch Niederdrücken des Fahrpedals geäußerte Wunsch des Fahrers wird in ein durch die Räder auf die Fahrbahn übertragenes Drehmoment umgesetzt, das die gewünschte Fahrzeugbewegung bewirkt. Das geforderte Radmoment wird über die Übersetzungen des Differentials und des Getriebes und über den Korrekturfaktor auf den Wert des Antriebsquellendrehmoments, das heißt in vorliegenden Ausführungsbeispiel auf den Wert des Drehmoments an der Kurbelwelle, zurück gerechnet.

Das Kurbelwellenmoment wird auf die erste Antriebsquelle und die zusätzliche Antriebsquelle, das heißt den Verbrennungsmotor 4 und den Kurbelwellenstartergenerator 12 aufgeteilt und die beiden Anteile werden durch die Motorsteuerung 4 beziehungsweise die ISG-Steuerung 13 eingestellt. Sinnvoll ist es zum Beispiel, die gesamte Drehmomentanforderung an die Motorsteuerung 4 auszugeben, bis das für den jeweiligen Betriebszustand maximal mögliche Motormoment erreicht ist, und darüber hinaus gehende Anteile an die Kurbelwellenstartergenerator-Steuerung 13 zu übertragen.

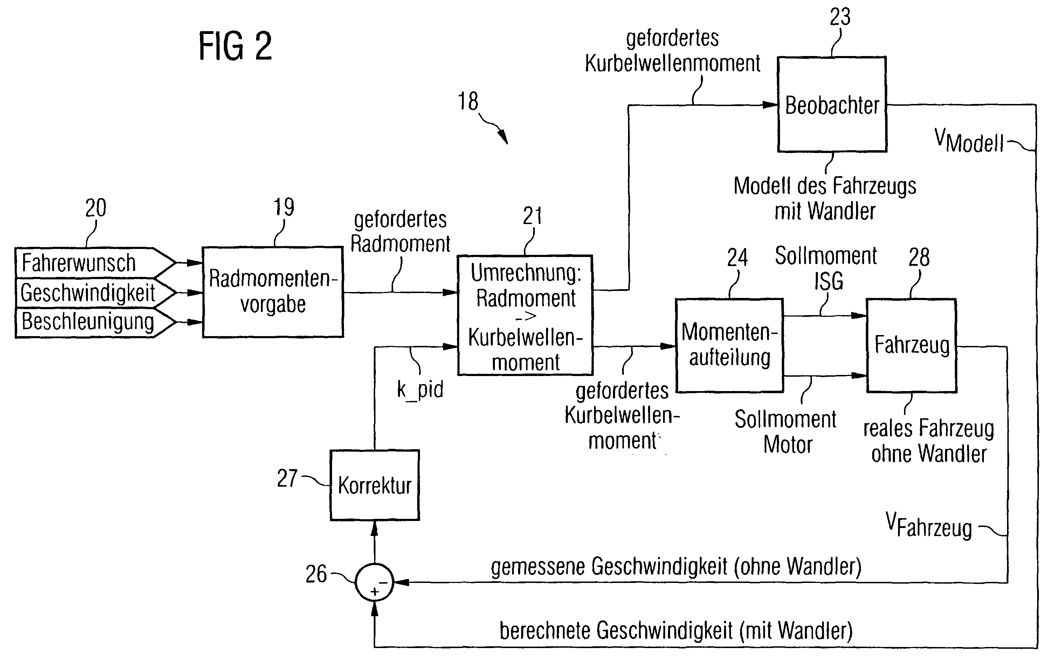

Ein aus Figur 2 ersichtliches Blockschaltbild des Regelungskonzeptes des Steuersystems 2 zeigt eine Schaltungsanordnung 18, die sich aus folgenden Blöcken zusammen setzt. Ein Block 19 "Radmomentenvorgabe" empfängt als Eingangssignale 20, die von Sensoren oder von einzelnen Steuergeräten im Kraftfahrzeug geliefert werden, die Größen Fahrerwunsch, Geschwindigkeit und Beschleunigung, und ermittelt aus diesen Eingangsgrößen eine Radmomentenvorgabe, das heißt den Wert des an den Antriebsrädern des Kraftfahrzeugs aufzubringenden Drehmoments. Der Ausdruck "Block" wird hier ganz allgemein für eine Rechen-, Auswerte-, Steuer- oder Regeleinrichtung verwendet, die sowohl als Schaltung als auch als Programm realisiert werden kann.

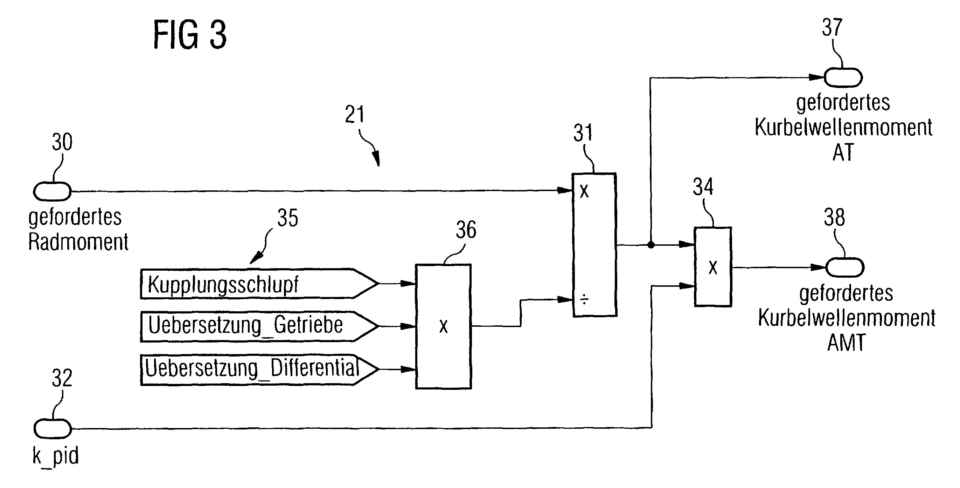

Das angeforderte Drehmoment wird in einem Block 21 "Umrechnung" mit den Übersetzungen der verschiedenen Komponenten des Antriebsstranges 1, insbesondere des Differentials und des Getriebes, in ein erforderliches Drehmoment an der Kurbelwelle des Motors 3 umgerechnet. Die Berechnung wird noch anhand von Figur 3 erläutert werden. Als Ausgangsgröße gibt der Block 21 das geforderte Kurbelwellenmoment aus, und zwar einerseits an einen Block 23 "Beobachter" und andererseits als korrigiertes Kurbelwellen(dreh)moment an einen Block 24 "Momentenaufteilung".

Aus dem in dem Block 21 berechnetem Kurbelwellenmoment wird in dem regelungstechnischen Block 23 "Beobachter" eine Fahrzeuggeschwindigkeit $v_{Modell}$ berechnet. Dieser Block 23 stellt ein Modell eines Antriebsstranges mit einem Drehmomentwandler dar, das heißt die Fahrzeuggeschwindigkeit $v_{Modell}$ entspricht derjenigen Geschwindigkeit, die ein vergleichbares Kraftfahrzeug, das mit einem hydrodynamischen Drehmomentwandler und einem Automatikgetriebe versehen ist, bei gleichem Fahrerwunsch einnehmen würde. Da die Wandlerübersetzung Betriebspunkt abhängig ist, enthält der Beobachter ein Modell des Drehmomentwandlers, das aus dem Kurbelwellenmoment und der Turbinendrehzahl (aus der Geschwindigkeit rückgerechnet) die Motordrehzahl ermittelt. Im dem Modell werden statische Kennlinien benutzt, die die Eigenschaften des Drehmomentwandlers beschreiben.

Die Fahrzeuggeschwindigkeit $v_{Modell}$ wird auf den Plus-Eingang eines Subtrahierglieds 26 gegeben, dessen Ausgang mit einem Block 27 "Korrektur" verbunden ist. Einzelheiten des Geschwindigkeitsberechnung und der Drehmomentaufteilung werden noch anhand der folgenden Figuren erläutert.

Die in dem Bock 24 ermittelten Anteile des Motordrehmoments, das heißt ein Sollmoment für den Kurbelwellenstartergenerator und ein Sollmoment für den Verbrennungsmotor werden als Ausgangssignale an die Antriebe des realen Kraftfahrzeugs ohne Drehmomentwandler übermittelt, das hier durch einen Block 28 symbolisiert wird. Das Kraftfahrzeug bewegt sich daraufhin mit einer Geschwindigkeit, die in üblicher Weise gemessen und als Messwert $v_{Fahrzeug}$ auf den Minus-Eingang des Subtrahiergliedes 26 gegeben wird.

Die Differenz aus berechneter Geschwindigkeit und gemessener Geschwindigkeit wird an den Block 27 übermittelt. Dieser Block 27 erzeugt einen Korrekturfaktor $k_{pid}$ und gibt ihn auf einen zweiten Eingang des Blocks 21. Damit ist ein Regelkreis für den Korrekturfaktor $k_{pid}$ geschlossen.

Die Umrechnung des geforderten Radmomentes über die Übersetzungen der verschiedenen Komponenten des Antriebsstranges in ein gefordertes Kurbelwellenmoment in Block 21 wird nun anhand von Figur 3 verdeutlicht. Über einen ersten Signaleingang 30 gelangt das geforderte Radmoment zu dem Zählereingang eines Dividiergliedes 31. Über einen zweiten Signaleingang 32 gelangt der Korrekturfaktor $k_{pid}$ zu einem ersten Eingang eines Multipliziergliedes oder Multiplizierers 34.

Als Eingangssignale 35 gelangen die Größen Kupplungsschlupf $slip_{clutch}$, Übersetzung des Getriebes $i_{Getr}$ und Übersetzung des Differentials $i_{Diff}$ an die Eingänge eines zweiten Multiplizierers 36. Dessen Ausgangssignal gelangt auf den Nennereingang des Dividiergliedes 31. Dessen Ausgangssignal wird einerseits als nicht korrigiertes, das heißt für einen Antriebsstrang mit automatischem Getriebe und hydrodynamischem Drehmomentwandler gefordertes, Kurbelwellenmoment über einen Signalausgang 37 ausgegeben.

Andererseits gelangt das Ausgangssignal zu einem zweiten Eingang des Multiplizierers 34, wird dort mit dem Korrekturfaktor $k_{pid}$ multipliziert und dann als gefordertes Kurbelwellenmoment für einen Antriebsstrang mit automatisiertem Handschaltgetriebe AMT und Kurbelwellenstartergenerator ISG über einen Signalausgang 38 ausgegeben. Das Ausgangssignal entspricht dem Wert der folgenden Gleichung

$$(tq_{eng} + tq_{ISG}) = \frac{tq_{wheel}}{slip_{clutch} * i_{AMT} * i_{Diff}} * k_{pid} \qquad \text{(Gl.1)}$$

Darin sind (siehe auch Gl.2):

| | |
|---|---|
| $\alpha_{Fahrbahn}$ | der Fahrbahnsteigungswinkel (zum Beispiel mit einem Sensor gemessen) |
| $\mu_{HTC}$ | die Momentenüberhöhung durch den HTC (beobachtete Größe) |
| $a_{Fahrzeug}$ | die Fahrzeugbeschleunigung (berechnet) |
| $i_{AMT} = i_{AT}$ | die Übersetzung des Automatikgetriebes (als konstant für den jeweiligen Gang angenommen) |
| $i_{Diff}$ | die Übersetzung des Differentials (wird als konstant angenommen) |
| $k_{pid}$ | der Korrekturfaktor |
| $r_{reifen}$ | der Reifenradius (als konstant angenommen) |
| $slip_{clutch}$ | der Kupplungsschlupf |
| $theta_{kfz}$ | das Trägheitsmoment des Fahrzeugs (als konstant angenommen) |
| $tq_{Eng}$ | das Istmoment des Verbrennungsmotors (über den Datenbus gemessen) |
| $tq_{Fahrwid}$ | Fahrwiderstand als $f(v_{Fahrzeug}$ und Winkel $\alpha_{Fahrbahn})$ |
| $tq_{ISG}$ | das Istmoment des ISG (über Datenbus gemessen) |
| $tq_{wheel}$ | das Radmoment |
| $v_{Fahrzeug}$ | die Fahrzeuggeschwindigkeit (gemessen) |
| $v_{Modell}$ | die Fahrzeuggeschwindigkeit (berechnet) |

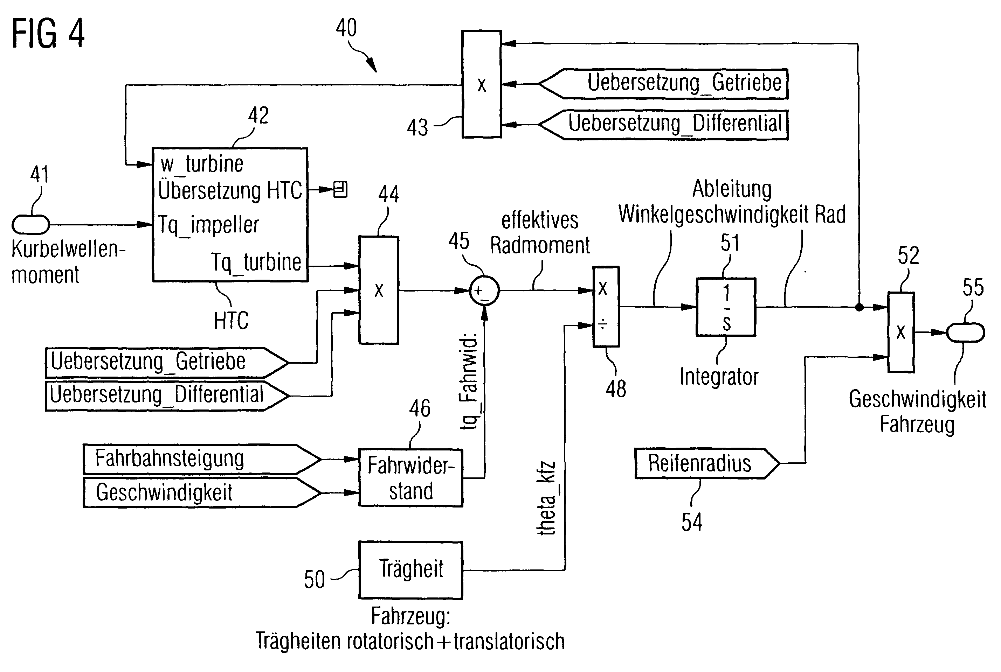

Der aus Figur 4 ersichtliche Signalflussplan 40 entspricht der Berechnung der Geschwindigkeit $v_{Modell}$ aus dem Kurbelwellenmoment in dem Block 23 "Beobachter". Das Kurbelwellenmoment gelangt über einen Signaleingang 41 zu einem ersten Eingang eines den hydrodynamischen Drehmomentwandler rechnerisch nachbildenden Blocks 42, und zwar als an dem Pumpenrad des Drehmomentwandlers anliegendes Motordrehmoment. Der zweite Eingang des Blocks 42 ist mit dem Ausgang eines Multiplizierers 43 verbunden, in dem folgende Werte mit der Abtriebswinkelgeschwindigkeit des hydrodynamischen Drehmomentwandlers multipliziert werden: die Übersetzung des Getriebes, die Übersetzung des Differentials und die Winkelgeschwindigkeit eines angetriebenen Rades.

Der Block 42 gibt an einem Ausgang den Wert des Drehmoments Tq_turbine an dem Turbinenrad auf einen Eingang eines Multiplizierers 44. An dessen weiteren Eingängen liegen ebenfalls die Werte Übersetzung des Getriebes und Übersetzung des Differentials an. Das Produkt der drei Eingangswerte gelangt an den Plus-Eingang eines Addierers 45.

Aus durch Sensoren oder anderweitig erfassten Werten der Fahrbahnsteigung und der Geschwindigkeit des Kraftfahrzeugs wird in einem Block 46 "Fahrwiderstand" das durch den Fahrwiderstand verursachte negative Widerstandsmoment tq_Fahrwid ermittelt und auf einen Minus-Eingang des Addierers 45 gegeben. Von dessen Ausgang wird das sich dabei ergebende effektive Radmoment an den Zählereingang eines Dividiergliedes 48 gelegt.

Von einem Block 50 "Trägheit" gelangt die Massenträgheit theta_kfz, und zwar die rotatorische und die translatorische Trägheit des Kraftfahrzeugs, zu dem Nennereingang des Dividiergliedes 48. In diesem wird die zeitliche Ableitung der Winkelgeschwindigkeit des Rades ermittelt und einem Integrator 51 zugeführt. Dieser berechnet daraus die Winkelgeschwindigkeit des Rades und gibt sie auf einen Eingang eines Multiplizierers 52. An dessen zweiten Eingang gelangt von einem Speicher 54 der Wert des Reifenradius. Aus beiden Eingangswerten berechnet der Multiplizierer 52 die Geschwindigkeit des Fahrzeuges und gibt sie über einen Ausgang 55 aus. Das hier ausgegebene Signal entspricht dem Wert der folgenden Gleichung

$$v_{Fahrzeug} = r_{reifen} * \int \frac{[(tq_{eng} + tq_{ISG})' * \mu_{HTC} * i_{AT} * i_{Diff} - tq_{Fahrwid}]}{theta_{kfz}} dt \qquad \text{(Gl.2)}$$

Hierin ist $(tq_{eng}+tq_{ISG})'$ das theoretische Wunschdrehmoment, das heißt, das von dem Fahrer angeforderte Antriebsdrehmoment, im Gegensatz zu den durch den Korrekturfaktor aus der Wunschmomentberechnung zu adaptierenden Stellgrößen des Antriebsstrangs 1. Die Bedeutung der weiteren Formelgrößen ist oben bei Gleichung Gl.1 erläutert. Die Schreibweisen $theta_{kfz}$ und theta_kfz usw. sind hier gleichwertig: erstere ist für mathematische Formeln geeignet, letztere für Rechnerprogramme.

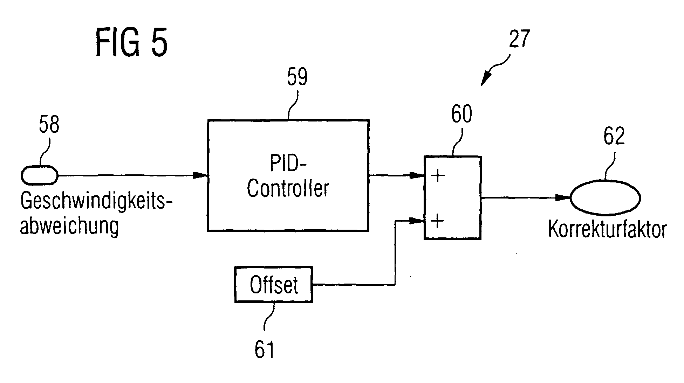

Einzelheiten des bislang schematisch dargestellten Blocks 27 "Korrektur" sind aus Figur 5 ersichtlich. Über einen Signaleingang 58 empfängt ein PID-Regler die Geschwindigkeitsabweichung $v_{Modell}$-$v_{Fahrzeug}$ und erzeugt daraufhin einen Stellwert, dem in einem Addierer 60 ein Offsetwert additiv hinzugefügt wird. Der Offsetwert dient dazu, den von dem PID-Regler erzeugten Stellwert an die Verstärkungswerte des hydrodynamischen Drehmomentwandlers anzugleichen. Er hat zum Beispiel den Zahlenwert eins. Die Summe bildet den Korrekturfaktor $k_{pid}$ und dieser wird über einen Ausgang 62 ausgegeben, und zwar wie erwähnt an den Block 21 "Umrechnung" (siehe Figur 2). Er bildet die Stellgröße und geht als Verstärkungsfaktor in die Berechnung des geforderten Kurbelwellenmomentes für den Antriebsstrang 1 mit ein. Dieser Wert des Kurbelwellenmomentes wird als Sollvorgabe an den realen Antriebsstrang übermittelt.

Ein Vergleich des Beschleunigungsverhaltens eines Fahrzeugs mit hydrodynamischem Drehmomentwandler und Automatikgetriebe und eines Fahrzeugs mit automatisiertem Handschaltgetriebe und Kurbelwellenstartergenerator zeigt - bei gleicher Fahrpedalvorgabe und gleichem Kurbelwellenmoment, also ohne die vorstehend beschriebene Korrektur -, dass der Antriebsstrang mit Drehmomentwandler eine deutlich höhere Fahrzeugbeschleunigung aufgrund der Momentenüberhöhung durch den Drehmomentwandler ermöglicht.

Hingegen zeigt ein Vergleich mit einem Antriebsstrang mit automatisiertem Handschaltgetriebe und Kurbelwellenstartergenerator und mit der beschriebenen Regelung des Kurbelwellenmomentes - bei gleicher Fahrpedalstellung -, dass dieses Fahrzeug ein Beschleunigungsverhalten aufweist, das dem eines Fahrzeugs mit hydrodynamischem Drehmomentwandler annähernd entspricht.

**Patentansprüche**

1. Antriebsstrang (1) eines Kraftfahrzeugs, der einschließt eine gesteuerte Antriebsquelle (3), eine Kupplung, ein automatisch schaltendes Getriebe (7), eine den Datenaustausch zwischen den Bestandteilen des Antriebsstrangs ermöglichende Datenübertragungseinrichtung (16) und eine zusätzliche Antriebsquelle, **dadurch gekennzeichnet, dass** er mit einem Steuersystem (2) versehen ist, durch das anhand eines Vergleichs des realen Verhaltens des Antriebsstrangs mit einem modellierten Verhalten eines mit einem hydrodynamischen Drehmomentwandler versehenen Antriebsstrangs ein Korrekturwert für das Antriebsquellendrehmoment erzeugt wird.

2. Antriebsstrang nach Anspruch 1, **dadurch gekennzeichnet,**

   - **dass** die gesteuerte Antriebsquelle (3) ein Verbrennungsmotor ist;
   - **dass** die zusätzliche Antriebsquelle ein Kurbelwellenstartergenerator (12) ist,
   - **dass** die Kupplung als automatisch betätigte Reibungskupplung ausgebildet ist, und
   - **dass** ein Regelkreis (21-27) vorgesehen ist, durch den das Verhalten eines Drehmomentwandlers nachgebildet wird.

3. Antriebsstrang nach Anspruch 1 oder 2, **dadurch gekennzeichnet, dass** das Steuersystem (2) enthält

- einen Umrechnungsblock (21), durch den anhand des Korrekturwerts eine Umrechnung eines geforderten Raddrehmoments in ein Kurbelwellendrehmoment durchgeführt wird, und
- eine Korrektureinrichtung (27), in der der Korrekturwert für das Drehmoment erzeugt wird.

4. Antriebsstrang nach einem der vorhergehenden Ansprüche, **dadurch gekennzeichnet, dass** das Steuersystem (2) eine Momentenaufteilung (24) aufweist, durch die das Antriebsquellendrehmoment auf die Antriebsquelle (3) und die zusätzliche Antriebsquelle (12) aufgeteilt wird.

5. Antriebsstrang nach einem der vorhergehenden Ansprüche, **dadurch gekennzeichnet, dass** das Steuersystem (2) einen Beobachterblock (23) aufweist, der ein Modell eines Antriebsstrangs mit einem hydrodynamischen Drehmomentwandler darstellt und durch den eine Fahrzeuggeschwindigkeit ($v_{Modell}$) berechnet wird, die derjenigen Geschwindigkeit entspricht, die ein vergleichbares Kraftfahrzeug, das mit einem hydrodynamischen Drehmomentwandler und einem Automatikgetriebe versehen ist, bei gleichem Fahrerwunsch einnimmt.

6. Antriebsstrang nach einem der vorhergehenden Ansprüche, **dadurch gekennzeichnet, dass** die Fahrzeuggeschwindigkeit nach folgender Gleichung ermittelt wird

$$v_{Fahrzeug} = r_{reifen} * \int \frac{[(tq_{eng} + tq_{ISG}) * \mu_{HTC} * i_{AT} * i_{Diff} - tq_{Fahrwid}]}{theta_{kfz}} dt$$

worin sind:

| | |
|---|---|
| $\mu_{HTC}$ | die Momentenüberhöhung durch den hydrodynamischen Drehmomentwandler |
| $i_{AT}$ | die Übersetzung des Automatikgetriebes |
| $i_{Diff}$ | die Übersetzung des Differentials |
| $r_{reifen}$ | der Reifenradius |
| $theta_{kfz}$ | das Trägheitsmoment des Fahrzeugs und |
| $tq_{Fahwid}$ | der Fahrwiderstand |
| $(tq_{eng}+tq_{ISG})'$ | das theoretische Antriebsdrehmoment |

7. Antriebsstrang nach einem der vorhergehenden Ansprüche, **dadurch gekennzeichnet, dass** das geforderte Antriebsdrehmoment für den Antriebsstrang (1) nach folgender Gleichung ermittelt wird

$$(tq_{eng} + tq_{ISG}) = \frac{tq_{wheel}}{slip_{clutch} * i_{AMT} * i_{Diff}} * k_{pid}$$

worin sind:

| | |
|---|---|
| $i_{AMT} = i_{AT}$ | die Übersetzung des Automatikgetriebes |
| $i_{diff}$ | die Übersetzung des Differentials |
| $k_{pid}$ | der Korrekturfaktor |
| $slip_{clutch}$ | der Kupplungsschlupf |
| $tq_{eng}$ | das Istmoment des Verbrennungs-Motors |
| $tq_{ISG}$ | das Istmoment des Kurbelwellenstartergenerators |
| $tq_{wheel}$ | das Radmoment |

8. Verfahren zum Steuern des Antriebsstrangs nach Anspruch 1, **dadurch gekennzeichnet, dass** anhand eines Vergleichs eines realen Verhaltens des Antriebsstrangs mit einem modellierten Verhalten eines mit einem hydrodynamischen Drehmomentwandler versehenen Antriebsstrangs ein Korrekturwert für das Antriebsquellendrehmoment erzeugt wird, wobei das Antriebsquellendrehmoment auf die erste und die zusätzliche Antriebsquelle aufgeteilt wird.

9. Verfahren nach Anspruch 8, **dadurch gekennzeichnet, dass** ein Umrechnungsblock anhand des Korrekturwerts eine Umrechnung eines geforderten Raddrehmoments in ein Antriebsquellendrehmoment durchführt.

10. Verfahren nach Anspruch 8 oder 9, **dadurch gekennzeichnet, dass** ein angefordertes Drehmoment mit den Übersetzungen der Komponenten des Antriebsstranges in ein erforderliches Drehmoment an der Kurbelwelle der Antriebsquelle umgerechnet wird.

**Claims**

1. Motor vehicle powertrain (1) comprising a controlled power source (3), a clutch, an automatically shifted transmission (7), a data transfer system (16) enabling data to be exchanged between the component parts of the powertrain, and an additional power source, **characterised in that** it is provided with a control system (2) for producing a correction value for the power source torque on the basis of a comparison of the real behaviour of the powertrain with a modelled behaviour of a powertrain provided with a hydrodynamic torque converter.

2. Powertrain according to Claim 1, **characterised in that**

   - the controlled power source (3) is an internal combustion engine;
   - the additional power source is a crankshaft starter/generator (12),
   - the clutch is implemented as an automatically actuated friction clutch, and
   - there is provided a feedback loop (21-27) for simulating the behaviour of a torque converter.

3. Powertrain according to Claim 1 or 2, **characterised in that** the control system (2) contains

   - a conversion block (21) for converting a required wheel torque to a crankshaft torque on the basis of the correction value, and
   - a correction device (27) in which the correction value for the torque is generated.

4. Powertrain according to one of the preceding claims, **characterised in that** the control system (2) has a torque divider (24) for splitting the power source torque between the power source (3) and the additional power source (12).

5. Powertrain according to one of the preceding claims, **characterised in that** the control system (2) has an observer block (23) which represents a model of a powertrain having a hydrodynamic torque converter and is used to calculate a vehicle speed ($V_{Model}$) corresponding to the speed assumed by a comparable motor vehicle provided with a hydrodynamic torque converter and an automatic transmission in response to the same driver input.

6. Powertrain according to one of the preceding claims, **characterised in that** the vehicle speed is determined in accordance with the following equation

$$V_{Fahrzeug} = r_{reifen} * \int \frac{[(tq_{eng} + tq_{ISG}) * \mu_{HTC} * i_{AT} * i_{Diff} - tq_{Fahrwid}]}{theta_{kfz}} dt$$

where:

| | |
|---|---|
| $\mu_{HTC}$ | is the increased torque provided by the hydrodynamic torque converter |
| $i_{AT}$ | is the gear ratio of the automatic transmission |
| $i_{Diff}$ | is the gear ratio of the differential |
| $r_{reifen}$ | is the tyre radius |
| $theta_{kfz}$ | is the moment of inertia of the vehicle and |
| $tq_{Fahrwid}$ | is the rolling resistance |
| $(tq_{eng}+tq_{ISG})'$ | is the theoretical driving torque |

7. Powertrain according to one of the preceding claims, **characterised in that** the required driving torque for the powertrain (1) is determined according to the following equation

$$(tq_{eng} + tq_{ISG}) = \frac{tq_{wheel}}{slip_{clutch} * i_{AMT} * i_{Diff}} * k_{pid}$$

where:

$i_{AMT} = i_{AT}$ is the gear ratio of the automatic transmission
$i_{Diff}$ is the gear ratio of the differential
$k_{pid}$ is the correction factor
$slip_{clutch}$ is the clutch slip
$tq_{eng}$ is the actual torque of the internal combustion engine
$tq_{ISG}$ is the actual torque of the crankshaft starter/generator
$tq_{wheel}$ is the wheel torque

8. Method for controlling the powertrain according to Claim 1, **characterised in that** a correction value for the power source torque is produced on the basis of a comparison of a real behaviour of the powertrain with a modelled behaviour of a powertrain provided with a hydrodynamic torque converter, the power source torque being divided between the first power source and the additional power source.

9. Method according to Claim 8, **characterised in that** a conversion block performs a conversion of a required wheel torque to a power source torque on the basis of the correction value.

10. Method according to Claim 8 or 9, **characterised in that** a demanded torque is converted to a necessary torque at the crankshaft of the power source using the gear ratios of the powertrain components.

**Revendications**

1. Chaîne cinématique (1) d'un véhicule automobile, laquelle comprend une source d'entraînement commandée (3), un embrayage, une boîte à commutation automatique (7), un dispositif de transmission de données (16) permettant l'échange de données entre les composants de la chaîne cinématique, et une source d'entraînement supplémentaire, **caractérisée en ce qu'**
elle est équipée d'un système de commande (2) permettant, à l'aide d'une comparaison réalisée entre le comportement réel de la chaîne cinématique et le comportement obtenu par modèle d'une chaîne cinématique équipée d'un convertisseur de couple hydrodynamique, d'engendrer une valeur de correction pour le couple de rotation de la source d'entraînement.

2. Chaîne cinématique selon la revendication 1, **caractérisée en ce que**

   - la source d'entraînement commandée (3) est un moteur à combustion interne;
   - la source d'entraînement supplémentaire est un générateur de démarrage d'arbre à vilebrequin (12);
   - l'embrayage est réalisé sous forme d'embrayage à friction automatique; et
   - un circuit de réglage (21-27) est prévu, lequel permet de simuler le comportement d'un convertisseur de couple.

3. Chaîne cinématique selon la revendication 1 ou 2, **caractérisée en ce que** le système de commande (2) comporte

   - un bloc de conversion (21) permettant de convertir, à l'aide de la valeur de correction, un couple de rotation des roues requis en un couple de rotation d'arbre à vilebrequin, et
   - un dispositif de correction (27) dans lequel est engendrée la valeur de correction pour le couple de rotation.

4. Chaîne cinématique selon l'une des revendications précédentes, **caractérisée en ce que** le système de commande (2) présente un dispositif de partage de couple (24) permettant de partager le couple de rotation de la source d'entraînement entre la source d'entraînement (3) et la source d'entraînement supplémentaire (12).

5. Chaîne cinématique selon l'une des revendications précédentes, **caractérisée en ce que** le système de commande (2) présente un bloc observateur (23) qui représente un modèle d'une chaîne cinématique équipée d'un convertisseur de couple hydrodynamique et qui permet de calculer une vitesse de véhicule ($V_{Modell}$) qui correspond à la vitesse d'un véhicule automobile comparable équipé d'un convertisseur de couple hydrodynamique et d'une boîte automatique, et ce pour une sollicitation identique de la part du conducteur.

6. Chaîne cinématique selon l'une des revendications précédentes, **caractérisée en ce que** la vitesse de véhicule est déterminée selon l'équation suivante :

$$v_{Fahrzeug} = r_{reifen} * \int \frac{[(tq_{eng} + tq_{ISG})' * \mu_{HTC} * i_{AT} * i_{Diff} - tq_{Fahrwid}]}{theta_{kfz}} dt \,,$$

dans laquelle :

$\mu_{HTC}$ est la surélévation de couple réalisée par le convertisseur de couple hydrodynamique
$i_{AT}$ est le rapport de la boîte automatique
$i_{diff}$ est le rapport du différentiel
$r_{reifen}$ est le rayon des roues
$theta_{ktz}$ est le couple d'inertie du véhicule
$tq_{Fahwid}$ est la résistance à la marche
$(tq_{eng}+tq_{ISG})'$ est le couple d'entraînement théorique

**7.** Chaîne cinématique selon l'une des revendications précédentes, **caractérisée en ce que** le couple d'entraînement requis pour la chaîne cinématique (1) est déterminé selon l'équation suivante :

$$(tq_{eng} + tq_{ISG}) = \frac{tq_{wheel}}{slip_{clutch} * i_{AMT} * i_{Diff}} * k_{pid} \,,$$

dans laquelle :

$i_{AMT} = i_{AT}$ est le rapport de la boîte automatique
$i_{Diff}$ est le rapport du différentiel
$k_{pid}$ est le facteur de correction
$slip_{cluch}$ est le glissement d'embrayage
$tq_{eng}$ est le couple réel du moteur à combustion interne
$tq_{ISG}$ est le couple réel du générateur de démarrage d'arbre à vilebrequin
$tq_{wheel}$ est le couple de rotation des roues.

**8.** Procédé permettant de commander la chaîne cinématique selon la revendication 1, **caractérisé en ce qu'**une valeur de correction pour le couple de rotation de la source d'entraînement est engendrée à l'aide d'une comparaison effectuée entre un comportement réel de la chaîne cinématique et un comportement obtenu par modèle d'une chaîne cinématique équipée d'un convertisseur de couple hydrodynamique, le couple de rotation de la source d'entraînement étant partagé entre la première source d'entraînement et la source d'entraînement supplémentaire.

**9.** Procédé selon la revendication 8, **caractérisé en ce qu'**un bloc de conversion convertit, à l'aide de la valeur de correction, un couple de rotation des roues requis en un couple de rotation de la source d'entraînement.

**10.** Procédé selon la revendication 8 ou 9, **caractérisé en ce qu'**un couple de rotation requis est converti au moyen des rapports des composants de la chaîne cinématique en un couple de rotation requis au niveau de l'arbre à vilebrequin de la source d'entraînement.

# FIG 1

# FIG 2

EP 1 444 109 B1

# FIG 3

- 37 gefordertes Kurbelwellenmoment AT
- 21
- 30 gefordertes Radmoment
- 31
- 34
- 38 gefordertes Kurbelwellenmoment AMT
- 35
  - Kupplungsschlupf
  - Uebersetzung_Getriebe
  - Uebersetzung_Differential
- 36
- 32 k_pid

EP 1 444 109 B1

FIG 4

FIG 5

Geschwindigkeits-abweichung 58

PID-Controller 59

Offset 61

60 + +

27

Korrekturfaktor 62